# EUROPEAN PATENT APPLICATION

(11) **EP 2 253 901 A1**
(43) Date of publication of application: **24.11.2010**
(21) Application number: 09160837.2
(22) Date of filing: 20.05.2009
(51) Int. Cl.: F24J 2/46

(54) **Cleaning apparatus for solar panels**

(71) Applicant: Suntop Solar Energy Co., Ltd., Fengyuan City, Taichung County 420 (TW)
(72) Inventor: Lee, Chang Chi, Taichung County 420 (TW)
(74) Representative: Beck & Rössig European Patent Attorneys

(57) **Abstract**

A cleaning apparatus for a solar panel, comprising a controlling device (10) and a solar panel (20), wherein the controlling device (10) is installed either on the bottom portion (21) or the back portion (22) of the solar panel (20). A driving motor (11) of the controlling device (10) is controlled by means of setting a timer (12), so that a driven cleaner (110) will be driven to clean the surface of the solar panel (20) on the preset time.

## Description

### BACKGROUND OF THE INVENTION

### 1. Field of the Invention

The present invention relates to a cleaning apparatus. More particularly, the present invention relates to an apparatus used in cleaning dust and other accumulations on a solar panel.

### 2. Description of Related Art

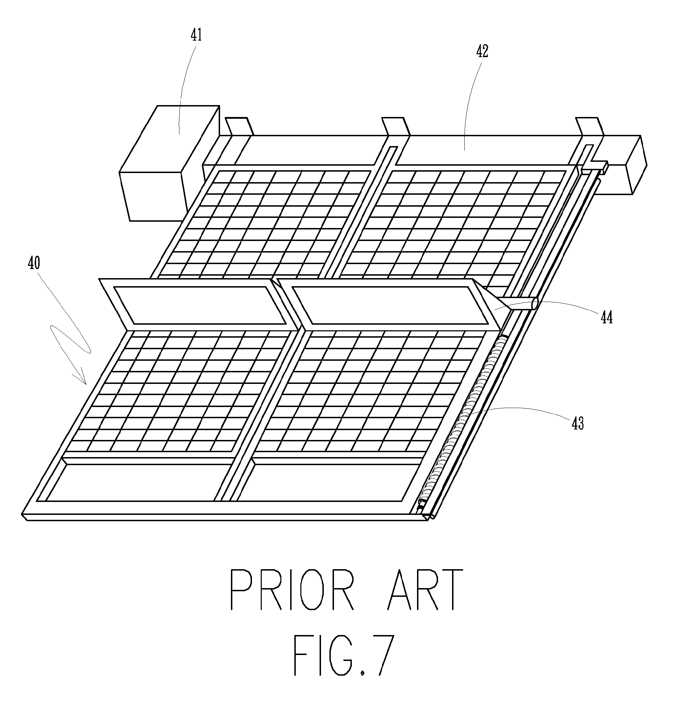

A conventional cleaning apparatus for a solar panel as shown in Fig. 7 comprises a solar panel 40, a driving device 41, a set of driving bars 42, a set of driven bars 43 and a scraper 44; wherein the driving device 41 and the driving bars 42 are disposed on the top of the solar panel 40 and connected to each other; in addition, the driven bars 43 are disposed aside the solar panel 40 which are driven by the driving bars 42; as for the scraper 44, it is mounted across the solar panel 40 transversely, and driven by the driven bars 43. By means of the structural arrangement stated above, the scraper 44 can be driven by the driving device 41 to clean up the dust on the solar panel 40 by way of the driving bars 42 and the driven bars 43.

However, the conventional cleaning apparatus has contained some improvable defects, such as:
1. Complicated structural combination: Due to the driving device 41 and the driving bars 42 of the conventional cleaning apparatus are disposed on the top of the solar panel 40, i.e. the side exposed to the sun, and connected to each other, meanwhile, the driven bars 43 are driven by the driving bars 42, and the scraper 44 which mounted across the solar panel 40 is driven by the driven bars 43. Thus, the components which are used in the conventional cleaning apparatus are miscellaneous, so that the overall structure of the conventional cleaning apparatus is tremendously complicated; and
2. High maintenance cost: Due to the driving device 41 and the driving bars 42 of the conventional cleaning apparatus are disposed on the top of the solar panel 40 and connected to each other, meanwhile, the driven bars 43 are driven by the driving bars 42, and the scraper 44 which mounted across the solar panel 40 is driven by the driven bars 43. Thus, the components which are used in the conventional cleaning apparatus are complicated, so that the maintenance costs of the apparatus is tremendously high.

The present invention is intended to improve the above mentioned drawbacks of the conventional cleaning apparatus for the solar panel. The present invention provides improved solutions to the problems of complicated structural combination and high maintenance cost which may cause.

### SUMMARY OF THE INVENTION

The primary purpose for the present invention is to provide a cleaning apparatus for a solar panel which is less complicated.

This technical problem is solved by a cleaning apparatus as defined in the claims.

The inventive cleaning apparatus comprises a controlling device and a solar panel, wherein the controlling device further comprises a driving motor having a driven cleaner, and a timer; the solar panel further comprises a bottom portion and a back portion. The controlling device may be installed on either place. The driving motor of the controlling device is controlled by means of setting the timer, so that the driven cleaner will be driven to clean up the front surface of the solar panel that is exposed to the sun, on the presetting time. Since the structural constitution of the present invention is simple, maintenance costs can be reduced significantly. Thus the objects of simplifying the structure and reducing the maintenance costs are achieved.

### BRIEF DESCRIPTION OF THE DRAWINGS

Fig. 1 is a perspective view schematically showing the first embodiment of the present invention;
Fig. 2 is a segmented view schematically showing the first embodiment of the present invention;
Fig. 3 is the front plan views schematically showing the practical use of the first embodiment;
Fig. 4 is a plan view schematically showing the electrical connection of the solar panel, DC/AC power conditioner and driving motor of the first embodiment;
Fig. 5 is a perspective view schematically showing the second embodiment of the present invention;
Fig. 6 is a perspective view schematically showing the third embodiment of the present invention; and
Fig. 7 is a perspective view of the conventional cleaning apparatus for the solar panel.

### DETAILED DESCRIPTION OF PREFERRED EMBODIMENT

While this invention is capable of embodiment in many different forms, what is shown in the drawings and described in detail herein is the preferred embodiment of the invention. The preferred embodiment is disclosed with the understanding that the present description is but one example of the principles of the invention and is not intended to limit the broad aspects of the invention to the single embodiment illustrated.

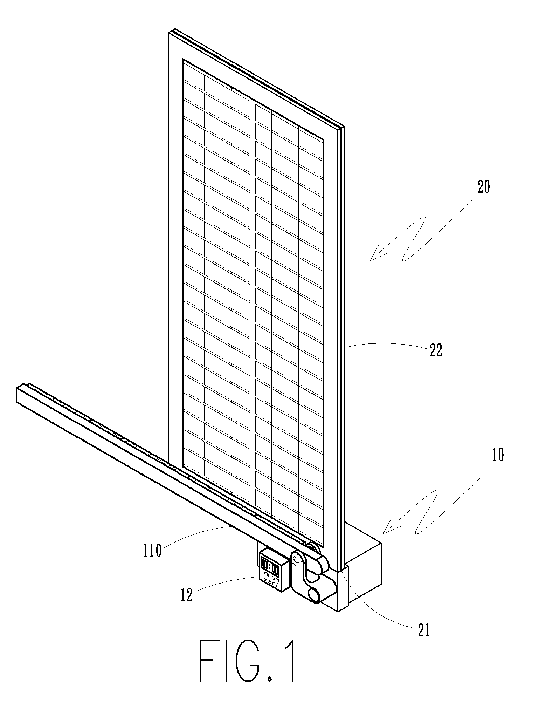

Figs. 1 to 2 are perspective and segmented views schematically showing a preferable embodiment of the present invention, i.e. a cleaning apparatus 10 for one or more solar panels 20. The solar panel 20 each have a front surface that is to be exposed to the sun, and a back portion 22 on the opposite side. The panels 20 include a rim and reference number 21 denotes a bottom portion that is substantially perpendicular to both, the front surface and the back portion. Usually, for an installed panel the bottom portion faces towards the ground.

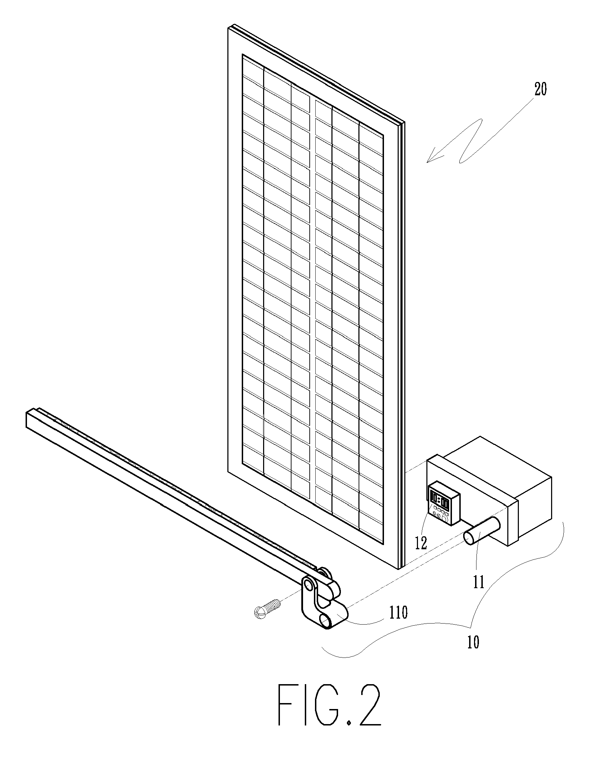

The cleaning apparatus for a solar panel comprises a controlling device 10 including a driving motor 11 and a timer 12. A driven cleaner 110 is assembled with the driving motor 11 and is in the form of brush or foam. As shown in Fig. 2, the cleaner 110 is adapted to rotate about an axis perpendicular to the front surface to wipe the front surface of the panel 20 or panels 20.

The controlling device 10 is installed either on bottom portion 21 or lower back of the back portion 22. A driving shaft of the driving motor 11 passes beneath the rim of the panels 20 and is connected to the cleaner 110. At rest the cleaner 110 is substantially parallel to a lower rim of the panel or panels 20 and preferably supported on the rim aside the light collecting portions of the panel or panels 20. However, it may also take a rest position that is parallel to a substantially vertical portion of the rim. It may also take a rest position on light collecting portions of the panel or panels 20. The controlling device 10 may also be arranged at the lateral edges of the upper edge of the rim or at a position close thereto at the back portion.

In light of the structural description stated above, the present invention fulfills a cleaning apparatus for the solar panel thereof.

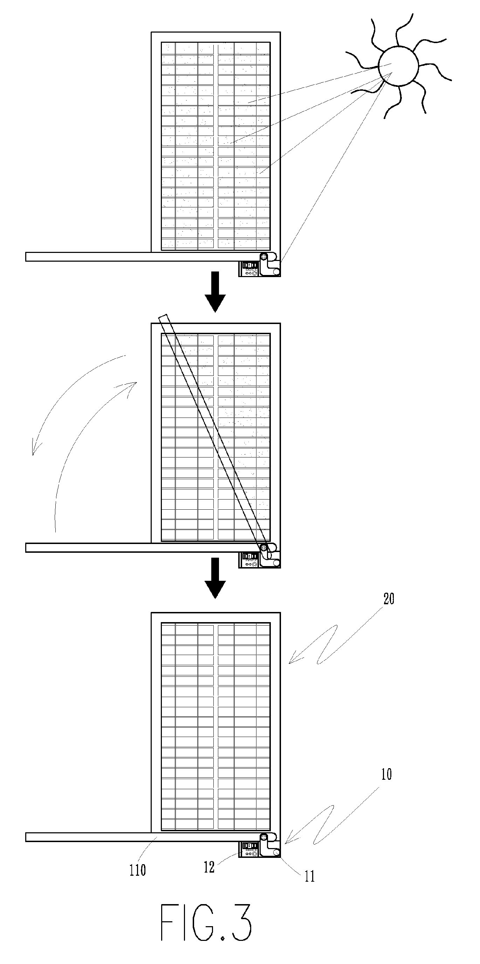

Fig. 3 is the front plan views schematically showing the practical use of the aforementioned embodiment. The controlling device 10 is installed either on bottom portion 21 or lower back of the back portion 22 of the solar panel 20. The driving motor 11 of controlling device 10 is controlled by means of setting the timer 12, so that the driven cleaner 110 will be driven to clean up the surface of the solar panel 20 on the presetting time. Since the structural constitution of the present invention is simple, so that the maintenance cost can be reduced significantly, thus the objects of simplifying the structure and reducing the maintenance costs are achieved.

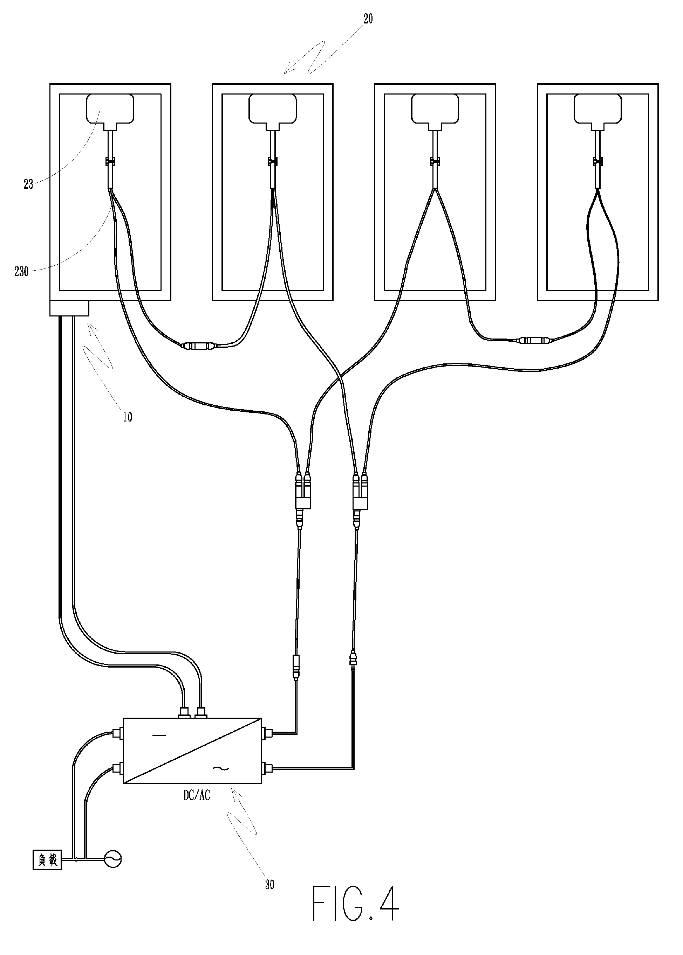

Fig. 4 is a plan view schematically showing the electrical connection of the solar panel, DC/AC power conditioner and driving motor of the first embodiment. An electrical junction box 23 is installed on the back portion 22 of the solar panel 20 extending an electric wire 230 to connect with the input connector of the power conditioner 30; in addition, the driving motor 11 also extends an another electric wire 230 to connect with the input connector of the power conditioner 30; as for the output connector of the power conditioner 30 is connected with a power loading.

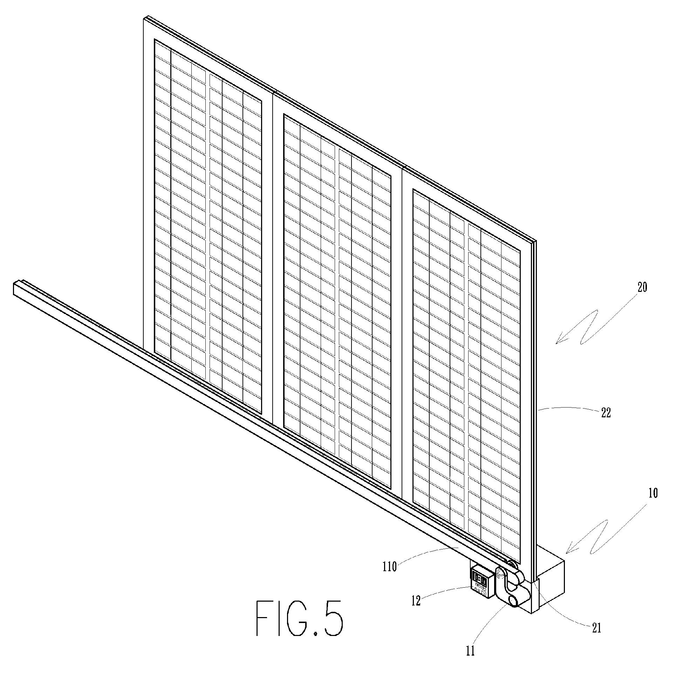

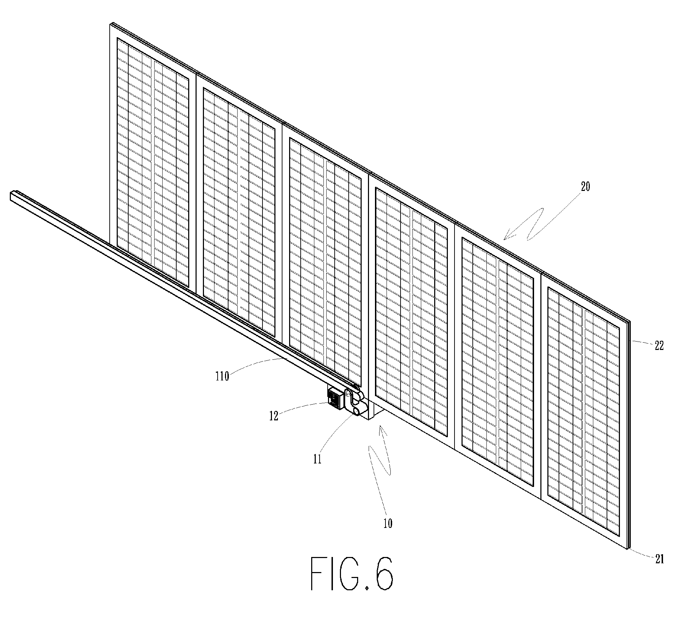

Figs. 5 and 6 are the perspective views schematically showing the second and third embodiments of the present invention. Similar to the first embodiment which is shown in Figs. 1 to 3, the second embodiment provides a cleaning apparatus comprising three solar panels 20 (as shown in Fig. 5), and the third embodiment provides a cleaning apparatus comprising six solar panels 20 (as shown in Fig. 6). In the case of comprising three solar panels 20 as shown in Fig. 5, the shorter driven cleaner 110 will be replaced with a longer one in the apparatus; and in the case of comprising six solar panels 20 as shown in Fig. 6, the controlling device 10 will be relocated at the middle position of the solar panels 20, likewise, the shorter driven cleaner 110 will be replaced with a longer one in the apparatus. Therefore, it is not necessary to change the main structure of the cleaning apparatus due to the increase of the solar panel 20, but replacing the driven cleaner 110 with a longer size.

In the light of the above, the advantages of the present invention include:
1. Simplified structural combination: The present invention provides a novel design which comprises a controlling device 10 having a driving motor 11 and a timer 12; and a solar panel 20 having a bottom portion 21 and a back portion 22; wherein the controlling device 10 is installed either on bottom portion 21 or lower back of the back portion 22 of the solar panel 20. Thus, the present invention provides a simple design which simplifies the overall structural combination; and
2. Lower maintenance cost: The driving motor 11 of controlling device 10 is worked by means of setting the timer 12, further to drive the driven cleaner 110 to clean up the surface of the solar panel 20 on the presetting time. Thus, the present invention provides a simple design which reduces the maintenance cost for the cleaning apparatus effectively.

Although numerous characteristics and advantages of the present invention have been described in detail in the foregoing description, together with the structure and function of the invention, this disclosure is only one of the examples, and changes may be made with regard to specific details, particularly to shape, size, and arrangement of parts within the invention to the full extent indicated by the general meaning of the terms in which the appended claims are expressed.

## Claims

1. A cleaning apparatus for a solar panel, comprising:
a controlling device (10) having a driving motor (11) and a timer (12), wherein a driven cleaner (110) is assembled with the driving motor (11); and
a solar panel (20) having a front surface, a back portion (22) and a bottom portion (21), the controlling device (10) is installed on the bottom portion (21) or on the back portion (22).

2. A cleaning apparatus for a solar panel according to claim 1, further comprising:
an electrical junction box (23) installed on the back portion (22) of the solar panel (20) having an electric wire (230); and
a power conditioner (30) having the input connectors connecting with the electrical junction box (23) and the driving motor (11) by electric wires (230), and an output connector connecting with a power loading.

3. An apparatus as claimed in claim 1 or 2, wherein the driven cleaner (110) is in the form of brush.

4. An apparatus as claimed in claim 1 or 2, wherein the driven cleaner (110) is in the form of foam.

5. An apparatus as claimed in one of claims 1 to 4, wherein the controlling device (10) is installed on a lower part of the back portion (22).

6. An apparatus as claimed in one of claims 1 to 5, wherein the cleaner (110) is adapted to rotate about an axis that is substantially perpendicular to the front surface of the panel (20).

7. An apparatus as claimed in one of claims 1 to 6, wherein the cleaner (110) is adapted to rest on the front surface the panel (20).
